Europäisches Patentamt

(19) **European Patent Office**

Office européen des brevets

(11) Publication number: **0 198 306**
**B1**

(12) # EUROPEAN PATENT SPECIFICATION

(45) Date of publication of the patent specification:
**02.11.89**

(51) Int. Cl.⁴: **A61C 8/00**

(21) Application number: **86104373.5**

(22) Date of filing: **13.08.82**

(60) Publication number of the earlier application in accordance
with Art. 76 EPC: **0086820**

(54) Dental implant.

(30) Priority: **14.08.81 US 303577**

(43) Date of publication of application:
**22.10.86 Bulletin 86/43**

(45) Publication of the grant of the patent:
**02.11.89 Bulletin 89/44**

(84) Designated Contracting States:
**AT CH DE FR GB LI LU NL SE**

(56) References cited:
**FR-A- 2 300 540**
**FR-A- 2 315 901**
**US-A- 3 849 887**
**US-A- 3 950 850**
**US-A- 4 217 100**
**US-A- 4 302 188**

(73) Proprietor: **TATUM, O Hilt Jr., One Beach Drive
Southeast, St. Petersburg, FL 33701(US)**

(72) Inventor: **TATUM, O Hilt Jr., One Beach Drive Southeast,
St. Petersburg, FL 33701(US)**

(74) Representative: **Hallam, Arnold Vincent et al, E.N. LEWIS
& TAYLOR 144 New Walk, Leicester LE1 7JA(GB)**

ACTORUM AG

## Description

### Technical Field

This invention relates to prosthodontic implants for rigidly securing a prosthesis in a natural or a prepared jawbone socket.

### Background Art

Presently there exist many types of dental implants designed to enable a prosthesis such as a crown replacement to be rigidly secured to the jawbone. Probably the most common type of dental implant consists of a threaded pin which is dimensioned to threadably engage the socket of a recently extracted tooth. U. S. Patents 3, 589,011 and 4,234,309 and German 3,355,916 are illustrative examples of such threaded-type implants. The primary disadvantage to the threaded implants is their tendency to loosen within the socket. The implant then has to be removed and replaced by a larger diameter implant. For obvious reasons, these threaded-type implants have not become widely accepted in the art.

U. S. Patent 3,835,033 discloses another type of implant which is designed to be inserted within the socket or alveolar cavity of a recently extracted tooth. More particularly, this type of implant comprises two posts which are inserted into the socket. A plurality of fins and spacers are alternatively slipped onto the posts extending from the socket, with the length of the spacers determining the distance between adjacent fins. The total number of fins and spacers are selected to achieve the desired height of the implant and correspondingly, the amount by which the implant extends from the socket. The implant is left within the socket for a period of time sufficient to enable the bone structure to grow between the adjacent fins. The prosthesis is then connected to the exposed end of the post. A primary disadvantage to this particular implant is the requirement that the implant be assembled piece by piece into the socket of the extracted tooth. This not only increases the difficulty of installing the implant but also increases the likelihood that one of the component pieces will be aspirated by the patient. Moreover, the numerous separate pieces, each of which must be machined to extreme tolerances, increases the overall cost of manufacture of these dental implants. For these reasons, although this type of implant overcomes many of the disadvantages of a screw-type dental implant, it has not been widely accepted in the trade due to its complexity.

U. S. Patent 4,060,896 discloses a threaded-type dental implant wherein a hardenable material is disposed in the jawbone socket prior to the implant being threaded therein. The purpose of the filler material is to assure that the implant will not loosen within the socket of the extracted tooth. It is anticipated that the material will be compressed into the immediately adjacent area of the jawbone as the implant is threaded into the socket. When the material hardens, the implant will be bonded to the bone structure of the jawbone. It should be noted that the filler material must be composed of a hardenable material which will not be rejected by the body.

U. S. Patent 3,672,058 illustrates another threaded-type dental implant which comprises a self-tapping conical screw. The taper of the self-tapping screw is designed such that the implant will threadably engage the socket of the extracted tooth and then threadably engage the portion of the jawbone located immediately below the socket. The socket may be filled with a hardenable resin prior to installing the implant therein. The resin is selected to increase the resistance to rejection of the implant and to avoid deformations of the jawbone.

It should be appreciated that the primary disadvantage to each of the above-described threaded-type implants is their tendency to loosen within the socket after a relatively short period of time. In order to overcome such a tendency, threaded-type implants such as the one disclosed in U. S. Patent 3,474,537 have been developed which are designed to threadably engage through the lower jawbone such that the head of the implant fits against the underside of the jawbone and the terminal end of the implant extends above the jawbone and the gum tissue for providing support to a prosthesis. The head of the implant comprises a flat configuration with one or more holes extending obliquely therethrough. A threaded fastener, such as a screw, is then provided for insertion through the oblique holes to threadably engage the lower portion of the lower jawbone thereby preventing rotation of the implant. Unfortunately, this type of implant can only be utilized when securing a prosthesis to the lower jawbone, and cannot be used for securing a prosthesis to the upper jawbone. Further a relatively tedious surgical procedure is necessary to properly install the implant.

U.S. patent 3 849 887 discloses a dental implant formed of substantially non-porous, isotropic carbon having a textured and dentated lower portion provided with at least one expanded groove to assure immobility during alveolar bone ingrowth. The implant is also provided with means for attaching an artificial crown section thereto.

The present invention seeks to provide an improved dental implant.

Accordingly, the present invention provides a dental implant comprising a major post, a plurality of first fins extending perpendicular to the post axis from one side of said major post along the longitudinal length thereof, a support cone or cylinder for supporting a prosthesis, and means for connecting said support cone to the proximal end of said major post, characterised in that said first fins are grouped in pairs, with said fins of each said pair being spaced closer together along the longitudinal length of said post than the spacing between adjacent pairs and in that said first fins are of an elongated configuration.

During use, the dental implant is inserted within a socket in the jawbone. The dental implant is then left in place for a period of time sufficient to allow the bone structure of the jawbone to grow between adjacent fins. A cap screw may be threaded into the post to prevent matter from entering into and contaminating the threads in the post. After the dental implant becomes rigidly secured into the bone structure of the jawbone, the cap screw is unthreaded from the post and a support cone is then threaded into the post. The support cone includes a shape substantially similar to a normal tooth preparation. The prosthesis, such as a crown, is then secured to the support cone by an adhesive or the like.

In a preferred embodiment of the invention the fins are integrally formed with the major post and include a substantially long but narrow configuration with the major post being positioned offset from the centre of the fins. One or more secondary posts are provided which extend through the outer portions of the fins to add rigidity to the fins. Because of its configuration this embodiment of the dental implant is designed to be inserted into an artificially created hole in the jawbone. However, it is pointed out that this embodiment of the dental implant is particularly suitable to be utilized in the posterior maxilla to be used for the elevation of the bony floor of the maxillary sinus thereby creating an equate receptor site in the bone when none naturally existed.

The present invention is further described hereinafter by way of example, with reference to the accompanying drawings, in which:

Figure 1 is a side view of one embodiment of a dental implant of the invention;
Figure 2 is a left end view of the implant of Figure 1;
Figure 3 is a top view of the implant of Figure 1 illustrating the configuration of the fins which extend radially from the major post;
Figure 4 is a side view of a modified dental implant.

Similar reference characters refer to similar parts throughout the several views of the drawings.

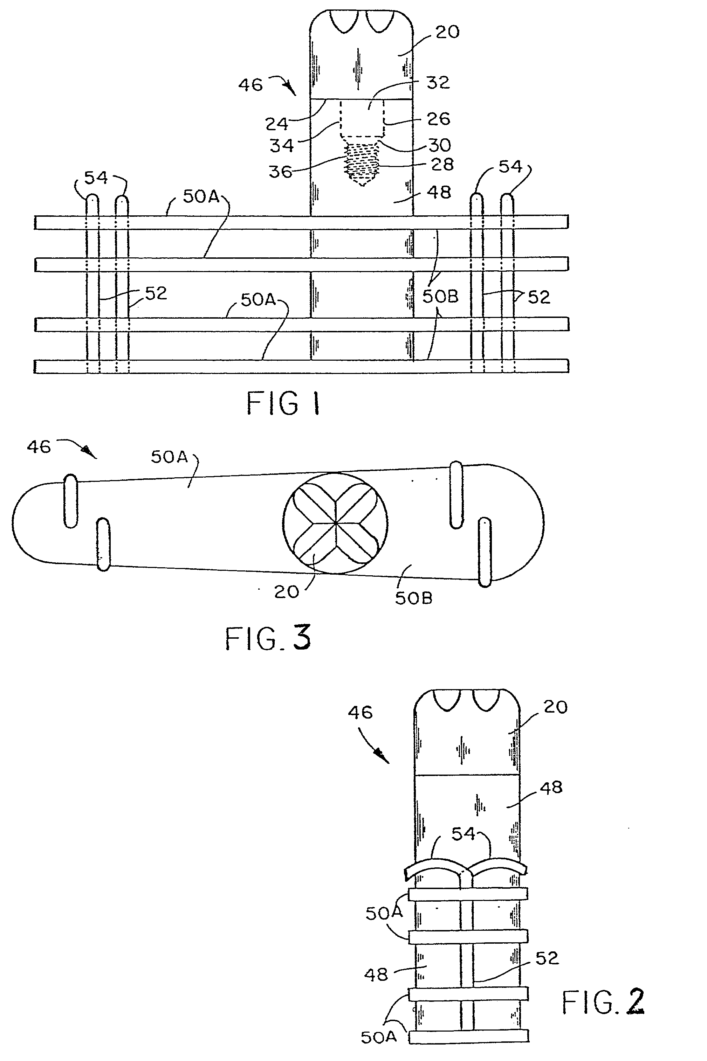

Figures 1–3 illustrate a preferred embodiment of dental implant 46 of the invention designed to be inserted within an artifically created socket in a jawbone. The dental implant 46 comprises a major post 48 having a plurality of fins 50A and 50B which extend perpendicularly to the post axis outward from diametrically opposite sides of the major post 48 respectively. The fins 50A extending from left of the major post 48 when viewed as shown in Figures 1 and 3 include a length greater than the length of those fins 50B extending to the right of the major post 48. As shown in Figure 3, the fins 50A and 50B when combined, produce a tapered design which tapers from the right fins 50B to the left fins 50A with the ends of each of the fins 50A and 50B being smoothly rounded. As shown in Figures 1 and 2, the two lowermost fins constitute a pair and the two uppermost fins constitute a pair such that the distance between the respective fins of each pair is less than the distance between adjacent fins of the lowermost and uppermost pairs respectively. One or more minor posts 52 extend through the stacked left fins 50A. Similarly, one or more minor posts 52 extend through the stacked right fins 50B. Preferably, at least two minor posts 52 are positioned through the respective left or right stacked fins 50A or 50B in close proximity to one another. Further, the upper end 54 of each of the minor posts 52 are preferably curved downwardly as shown in Figure 2. When using two closely positioned minor posts 52, the upper ends 54 thereof are preferably curved in opposite directions.

The upper end of the major post 48 threadably receives a support cone 20 to which a prosthesis, such as a crown is connected.

A counterbore 26 is axially disposed within the upper surface 24 of the post 48. A threaded hole 28 extends concentrically from the bottom of the counterbore 26 into a substantial length of the post 48. Preferably the diameter of counterbore 26 is appreciably greater than the diameter of the threaded hole 28 to provide a chamfered seat 30 at the junction thereof. The support cone 20 comprises a stud 32 extending axially from the bottom thereof. The stud 32 comprises a shank portion 34 and a threaded portion 36. Preferably the length of the shank portion 34 is substantially equal to the depth of the counterbore 26 such that the end of the shank portion 34 seats against the chamfered seat 30 of the boss 16 when the support cone 20 is threaded into the threaded hole 28. Further, the exposed end of the support cone 20 preferably comprises a shape corresponding to a normal tooth preparation which is accomplished prior to crown placement.

More particularly, the dental implant 46 is inserted into an artifically created receptor site or socket which is formed into the jawbone of the patient by well known dental procedures. Preferably, the receptor site includes a horizontally tapered cross-section corresponding to the configuration of the individual fins 50 and includes a depth sufficient to enable all of the fins 50 to be inserted below the upper surface of the jawbone. The implant 46 is left in position for a substantial amount of time of approximately two months to enable the bone structure to grow between the fins 50. A cap screw may be threaded into the major post 48 to prevent matter from entering into and contaminating the threads of the threaded hole 28. After the implant 46 is rigidly secured within the bone structure of the jawbone, the cap screw is removed and the support cone 20 is then threaded into the threaded hole 28 until the lower surface of the support cone 20 is securely seated against the upper surface 24 of the major post 48. The curved upper ends 54 of the minor posts 52 function to stabilize the gum tissue over the upper surface of the dental implant.

It should be pointed out that the dental implant 46 is particularly suitable for installation into artificially created receptor sites in the posterior maxilla to elevate the bony floor of the maxillary sinus thereby creating an equate receptor site in the bone when none naturally exists.

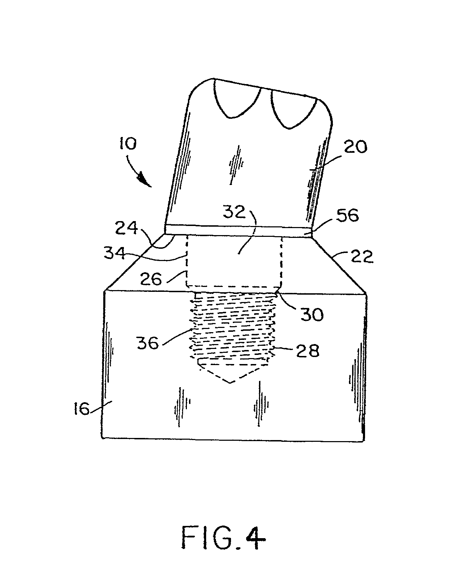

It is noted that in some instances it may be desirable to position the support cone 20 at an angle with respect to the axis of a boss 16 formed integrally at the proximal end of the major post 48. Accordingly, Figure 4 illustrates a means by which this may be accomplished. Specifically, the tilted relationship of the support cone 20 may be accomplished by angling the stud 32 with respect to the axis of the support cone 20. When the support cone 20 is threaded into the boss 16, the support cone 20, when seated against the upper surface 24 of the boss 16 will be titled at an acute angle. The rotational position of this angle of tilt may be varied by incorporating a washer 56 between the support cone 20 and the boss 16 with the thickness of the washer 56 in proportion to the slope of the threads of the threaded portion 36 determining the rotational position of the angle of tilt. Thus, the rotational position of the tilt with respect to the dental implant 10 is determined by merely selecting a washer 56 having an appropriate thickness with respect to the threads of the threaded portion 36.

Unlike the prior art devices, the dental implant of the present invention is not screwed or cemented into the spongy bone walls of the alveolar cavity but rather spongy bone grows around the fins 50 and firmly anchors the fins within the alveolar cavity. In practice, after two months from implantation, the dental implant is sufficiently anchored to the jawbone to permit the support cone 20 to be threadably secured in place. During the period of two months while the spongy bone or medulla are growing around the fins, a screw is threaded into the threaded bore of the boss 16 or post 48 to inhibit the ingress of deleterious matter into the threaded hole 28.

The implant shown in Figures 1, 2 and 3 finds application in the posterior maxilla, more particularly where the site has been created artificially or where the bony floor of the maxillary sinus is naturally non-existing. In the latter case the implant creates an equate receptor site in the bone.

As the implant device of the present invention is machined from a solid piece of metal, there is no need to assemble the fins to the post as has been the case in some prior art implant devices.

The implant device of the present invention is primarily intended for use in an artificially created site using conventional site fitting tools which will allow the preparation of the bony sites by using techniques of bone expansion to create sites which are suitable in shape to receive the implants.

Implants of the type illustrated in Figures 1, 2 and 3 are approximately 3 centimetres in depth, 0.65 centimetres in width and at least 1 centimetre in height. A surgical grade titanium alloy is the preferred material for construction of the main body of the dental implant while the sleeve is of aluminium oxide. The washers or shims 56 are of a thickness such that they correspond with quarter, half, and three-quarter turns of the support cone respectively.

## Claims

1. A dental implant comprising a major post (48), a plurality of first fins (50A) extending perpendicular to the post axis from one side of said major post (48) along the longitudinal length thereof, a support cone or cylinder (20) for supporting a prosthesis, and means (28, 32) for connecting said support cone (20) to the proximal end (18) of said major post (48), characterised in that said first fins (50A) are grouped in pairs, with said fins of each said pair being spaced closer together along the longitudinal length of said post (48) than the spacing between adjacent pairs and in that said first fins (50A) are of an elongated configuration.

2. A dental implant as claimed in claim 1 further comprising, a minor post (52) extending through said fins (50A) substantially parallel to said major post (48); an upper end (54) of said minor post (52) extending above said fins and being curved downwardly.

3. A dental implant as claimed in claim 2 wherein said minor post (52) is positioned adjacent the end of said fins (50A) remote from said major post (48) for increasing the rigidity of said fins.

4. A dental implant as claimed in claim 1, 2 or 3, further comprising a second minor post (52) which is positioned in close proximity to the first said minor post (52) and has an upper end extending above said fins(50A) and being curved downwardly.

5. A dental implant as claimed in claim 4, wherein said upper ends of said first and said second minor posts (52) are curved in opposite lateral directions.

6. A dental implant as claimed in any of claims 1 to 5, further comprising a plurality of second fins (50B) extending radially from the side of said major post (48) diametrically opposite said first-mentioned fins (50A), said second fins extending along the longitudinal length of said major post (48).

7. A dental implant as claimed in claim 6, wherein the number of said second fins (50B) corresponds to the number of said first-mentioned fins (50A) and wherein said first-mentioned fins are aligned with said second fins along the longitudinal length of said major post (48).

8. A dental implant as claimed in any of claims 1 to 7 further comprising a boss connected to the proximal end of said major post (48); a support cone (20) for supporting a prosthesis;a stud (32) incorporated with and extending from the bottom of said support cone (20), said stud having a threaded portion (36) connected to said support cone by a shank; a counterbore (26) in said boss for receivably engaging said shank; a threaded hole (28) in said boss for threadably engaging said threaded portion (36); and a washer positioned between said support cone and said boss for changing the rotational angular position of said support cone; wherein said stud (32) is angularaly positioned with respect to said support cone (20) such that said support cone is angularly tilted with respect to said boss when threaded thereto.

## Patentansprüche

1. Dentales Implantat, mit einem Hauptpfeiler (48), mit einer Vielzahl von ersten Rippen (50A), die sich senkrecht zur Pfeilerachse von einer Seite des Hauptpfeilers (48) aus erstrecken und in dessen Längserstreckung angeordnet sind, mit einem Trägerkonus oder -zylinder (20) zum Halten einer Prothese und mit Mitteln (28, 32) zum Verbinden des Trägerkonus (20) mit dem benachbarten Ende (18) des Hauptpfeilers (48), dadurch gekennzeichnet, daß die ersten Rippen (50A) paarweise gruppiert sind, wobei der Abstand der Rippen jedes Paares in Längserstreckung des Pfeilers (48) geringer als der Abstand zwischen benachbarten Paaren ist, und daß die ersten Rippen (50A) eine langgestreckte Form besitzen.

2. Dentales Implantat nach Anspruch 1, dadurch gekennzeichnet, daß es ferner einen Nebenpfeiler (52) aufweist, der sich durch die Rippen (50A) hindurch im wesentlichen parallel zum Hauptpfeiler (48) erstreckt, und daß ein oberes Ende (54) des Nebenpfeilers (52) sich oberhalb der Rippen erstreckt und nach unten gebogen ist.

3. Dentales Implantat nach Anspruch 2, dadurch gekennzeichnet, daß zum Erhöhen der Steifigkeit der Rippen der Nebenpfeiler (52) nahe dem dem Hauptpfeiler (48) abgewandten Ende der Rippen (50A) angeordnet ist.

4. Dentales Implantat nach Anspruch 1, 2 oder 3, dadurch gekennzeichnet, daß es ferner einen zweiten Nebenpfeiler (52) aufweist, der in unmittelbarer Nähe zum ersten Nebenpfeiler (52) angeordnet ist und ein oberes Ende besitzt, das sich oberhalb der Rippen (50A) erstreckt und nach unten gebogen ist.

5. Dentales Implantat nach Anspruch 4, dadurch gekennzeichnet, daß die oberen Enden des ersten und des zweiten Nebenpfeilers (52) in entgegengesetzten seitlichen Richtungen gebogen sind.

6. Dentales Implantat nach einem der Ansprüche 1 bis 5, dadurch gekennzeichnet, daß es ferner eine Vielzahl zweiter Rippen (50B) aufweist, die sich von der Seite des Hauptpfeilers (48) aus radial und den erstgenannten Rippen (50A) diametral gegenüberliegend erstrecken, und daß die zweiten Rippen in Längserstreckung des Hauptpfeilers (48) angeordnet sind.

7. Dentales Implantat nach Anspruch 6, dadurch gekennzeichnet, daß die Anzahl der zweiten Rippen (50B) der Anzahl der ersten Rippen (50A) entspricht und daß in Längserstreckung des Hauptpfeilers (48) die ersten Rippen und die zweiten Rippen in einer Flucht liegen.

8. Dentales Implantat nach einem der Ansprüche 1 bis 7, dadurch gekennzeichnet, daß es ferner einen Ansatz, der mit dem benachbarten Ende des Hauptpfeilers (48) verbunden ist, einen Trägerkonus (20) zum Halten einer Prothese, einen Bolzen (32), der in den Boden des Trägerkonus (20) eingefügt ist und von diesem vorsteht, wobei der einen Gewindebereich (36) aufweisende Bolzen mit dem Trägerkonus über einen Schaft verbunden ist, eine Gegenbohrung (26) in dem Ansatz zum Aufnehmen des Schaftes, eine Gewindebohrung (28) in dem Ansatz zum schraubbaren Aufnehmen des Gewindebereichs (36) und eine Zwischenscheibe aufweist, die zwischen dem Trägerkonus und dem Ansatz zum Ändern der Drehwinkelstellung des Trägerkonus angeordnet ist, und daß der Bolzen (32) bzgl. des Trägerkonus (20) derart winklig angeordnet ist, daß der Trägerkonus gegenüber dem Ansatz nach dem Verschrauben winklig gekippt ist.

## Revendications

1. Implant dentaire comprenant un tenon principal (48), un ensemble de premières ailettes (50A) s'étendant perpendiculairement à l'axe géométrique du tenon à partir d'un côté du tenon principal (48) sur la longueur longitudinale de celui-ci, un cône ou cylindre de support (20) destiné à supporter une prothèse, et des moyens (28, 32) destinés à relier ce cône de support (20) à l'extrémité proximale (18) de ce tenon principal (48), caractérisé en ce que ces premières ailettes (50A) sont regroupées par paires, l'espacement entre les ailettes de chaque paire étant plus réduit sur la longueur longitudinale du tenon (48) qu'entre des paires contiguës, et en ce que les premières ailettes (50A) sont de configuration allongée.

2. Implant dentaire selon la revendication 1, comprenant de plus un petit tenon (52) s'étendant à travers les ailettes (50A) de façon sensiblement parallèle au tenon principal (48), une extrémité supérieure (54) du petit tenon (52) s'étendant au-dessus de ces ailettes et étant recourbée vers le bas.

3. Implant dentaire selon la revendication 2, dans lequel le petit tenon (52) est positionné de façon contiguë à l'extrémité des ailettes (50A) en éloignement du tenon principal (48) pour augmenter la rigidité des ailettes.

4. Implant dentaire selon la revendication 1, 2 ou 3, comprenant de plus un second petit tenon (52) qui est positionné à proximité immédiate du premier petit tenon (52) et présente une extrémité supérieure s'étendant au-dessus des ailettes (50A) et étant recourbée vers le bas.

5. Implant dentaire selon la revendication 4, dans lequel les extrémités supérieures des premier et second petits tenons (52) sont recourbées dans des directions latérales opposées.

6. Implant dentaire selon l'une quelconque des revendications 1 à 5, comprenant de plus un ensemble de secondes ailettes (50B) s'étendant radialement à partir du côté du tenon principal (48) diamétralement opposé aux ailettes mentionnées en premier (50A), ces seconde ailettes s'étendant sur la longueur longitudinale du tenon principal (48).

7. Implant dentaire selon la revendication 6, dans lequel le nombre de secondes ailettes (50B) correspond au nombre d'ailettes mentionnées en premier (50A) et dans lequel les ailettes mentionnées en premier sont alignées avec les secondes ailettes sur la longueur longitudinale du tenon principal (48).

8. Implant dentaire selon l'une quelconque des revendications 1 à 7, comprenant de plus un bossage relié à l'extrémité proximale du tenon principal (48); un cône de support (20) destiné à supporter une prothèse; un goujon (32) incorporé avec et s'étendant à partir du fond de ce cône de support (20), ce goujon ayant une portion filetée (36) reliée au cône de support par un corps principal; un contre-alésage (26), dans le bossage destiné à recevoir le corps; un trou fileté (28) dans l'alésage destiné au vissage de la portion filetée (36); et une rondelle positionnée entre le cône de support et le bossage pour modifier la position angulaire de rotation du cône de support; implant dentaire dans lequel le goujon (32) est positionné angulairement par rapport au cône de support (20) de telle manière que ce cône de support puisse être incliné angulairement par rapport au bossage lors du vissage dans celui-ci.

FIG I

FIG. 3

FIG. 2

10

20

32

56

24

34

22

26

30

36

28

16

FIG.4